Europäisches Patentamt

**European Patent Office**

Office européen des brevets

(11) Publication number: **0 089 201**
**A2**

(12) **EUROPEAN PATENT APPLICATION**

(21) Application number: **83301362.6**

(22) Date of filing: **11.03.83**

(51) Int. Cl.³: **B 29 C 17/07**

(30) Priority: **11.03.82 US 357351**

(43) Date of publication of application:
**21.09.83 Bulletin 83/38**

(84) Designated Contracting States:
**AT BE CH DE FR GB LI NL SE**

(71) Applicant: **CONTINENTAL PACKAGING COMPANY, INC.**
**51 Harbor Plaza**
**Stamford Connecticut 06904(US)**

(72) Inventor: **Beck, Martin Harry**
**129 Pepperell Road**
**Brookline New Hampshire 03033(US)**

(72) Inventor: **Krishnakumar, Suppayan Manickam**
**23 Old Coach Road**
**Nashua New Hampshire 03062(US)**

(72) Inventor: **Prevot, Stephane Claude**
**PO Box 3165**
**Nashua New Hampshire 03061(US)**

(74) Representative: **Palmer, Roger et al,**
**PAGE, WHITE & FARRER 5 Plough Place New Fetter Lane**
**London EC4A 1HY(GB)**

(54) **Reheating of preforms with radio frequency energy.**

(57) This relates to the discovery that when polymer preforms are reheated in the forming of polymer bottles by blow molding techniques, if the reheating is effected by the use of RF energy, there will be a heating of the interior wall portion of the preform to a higher temperature than that of the exterior wall portion, with the result that, due to the requirement of greater stretching of the interior preform wall portion, a more effective stretching of the heated preform during the blow molding thereof occurs with a highly beneficial result including a more controlled stretching of the polymer and a material reduction of the recently discovered chain scission and laminating effect which exists in like bottles formed of like preforms using present commercial heating methods. The differential temperature gradient resulting from RF heating has particularly beneficial results when the polymer is PET.

FIG. 4

- 1 -

## REHEATING OF PREFORMS
## WITH RADIO FREQUENCY ENERGY

This invention relates in general to new and useful improvements in the blow molding of bottles and like tubular members from preforms, and more specifically to the reheating of preforms of polyethylene terephthalate (PET) using radio frequency energy in a manner wherein the desired temperature gradient across the wall of the preform may be obtained for maximum consistency in orientation of the wall of the blow molded article.

It is conventional at the present time in the bottle forming art to form preforms in one operation and in a second operation to heat the preforms to a blow molding temperature, after which the heated preforms are blow molded to the desired configuration within the blow mold. In the mass production of plastic beverage bottles which are subjected to high internal pressures, the preforms are heated within ovens employing calrod heaters, and most recently consideration is being given to the utilization of quartz heaters for greater efficiency. The preforms which are heated in the ovens are heated from outside inwardly, and the net result is that the external surface of the preform is heated to a higher temperature than the interior surface.

When a preform is blow molded into a large diameter member, the polymers of the outer surface of the preform will flow more uniformly than the inner surface polymers due to the aforementiond temperature differential. The stretch ratio in the body of a beverage bottle is particularly large in the hoop direction, and with the inner surface being colder in temperature than the external surface, during this relatively great stretching the polymers will crack, thus causing a spoiled bottle. This cracking shows up as a whitening which is an aesthetic defect.

Further, there is a tendency for internal lamination with the result that there are internal voids which permit an undue transfer of gases, particularly an undue loss of $CO_2$ when the packaged product is a carbonated beverage. The fluid transfer occurs when individual molecules of the fluid slip between molecules of the polymer. The fluid molecules traverse the wall of the bottle by slipping between polymer chains and also by jumping across internal voids in the wall of the bottle. These voids, as discussed above, are caused by non-uniform stretching of the preform wall with resultant chain scissioning, when the preform is blown into a bottle or like article having a large diameter. The existence of the voids results in a much greater fluid molecule transfer ($CO_2$ loss) than would occur solely by the fluid molecules slipping through the molecules of the polymer.

The deficiency of a temperature gradient through the wall of the preform being highest at the external surface of the preform while the interior surface of the preform is stretched further than the external surface during the blow molding of the preform has been previously recognized by others with respect to thermoplastic, polymeric preforms formed of materials other than PET with particular reference being directed to nitriles. As a result, it has been previously proposed that the preforms be so reheated wherein the temperature gradient across the wall thereof is highest at the internal surface of the preform. Discussions with respect to a solution to the problem relative to nitriles are found in U. S. Patent No. 3,786,221 to Silverman, granted January 15, 1974, and U. S. Patent No. 3,934,743 to McChesney et al, granted January 27, 1976.

The foregoing patents, however, employ a heating apparatus which has been found not to be economically satisfactory in the mass production of beverage bottles in that the preform must be mounted on a core or mandrel and must be positioned within a mold-like shell in order to obtain the desired heating. Such a heater is not readily adaptable to continuous blow molding operations, and furthermore in order to obtain any efficiency whatsoever, because of the necessity to maintain control over the preform it is necessary to utilize the core or mandrel as a blow stick, thereby precluding axial mechanical stretching of the preform as is highly desirable in many blow molding operations.

It is also known in the prior art to utilize infrared heaters for heating high nitrile materials. This is disclosed, for example, in U. S. Patent No. 3,-820,893 to Steingiser, granted August 20, 1974. More recently commercial efforts have been made to reheat PET preforms utilizing quartz heaters. A typical disclosure of such heaters is found in U. S. Patent No. 4,147,487 to Dickson et al, granted April 3, 1979.

While those persons most familiar with the commercial forming of plastic beverage bottles and the like using PET preforms did not consider PET to have the required properties for reheating of the preforms utilizing RF energy, one of us, together with other associates, did believe that preforms could be successfully commercially reheated utilizing RF energy and has now found that PET preforms can be very quickly reheated using RF energy and has been able successfully to blow commercially acceptable beverage bottles utilizing PET preforms reheated utilizing RF energy.

We have now discovered that when PET preforms are passed between a pair of electrode plates to which there is connected a source of RF energy and the preforms are uniformly rotated during such passage, the preforms have been unexpectedly heated so that there is a temperature gradient across the wall of the preform with the temperature being the highest internally of the preform as is desired in accordance with the teachings of the aforementioned U. S. Patent Nos. 3,786,221 and 3,934,743. We have thus been able to engage the preforms by the neck area only and to transport the preforms in the customary manner and to obtain the desired temperature gradient throughout the wall of the preform without requiring the use of internal mandrels and external mold-like members.

We have also found that the flow of RF energy through the wall of the preform is not uniform, there being a greater concentration of the energy field adjacent the inner surface of the preform wall so as to produce this unexpected and highly desirable temperature gradient.

We have further found that when the preform is provided with the customary rounded or hemispherical bottom, that there is a tendency of the overheating of the bottom which can be corrected by proper electrode design and relationship relative to the preform.

It is also to be noted here that in the past an attempt has been made to overheat the polymer preform and then to cool the exterior of the heated preform so as to obtain the desired temperature gradient throughout the heated preform wall. However, with certain polymers, particularly PET, if the overall temperature is raised to prevent the stress whitening defect, the outer surface of the preform is frequently overheated and thus crystallizes, causing pearlescence which is also an undesired visual defect.

When the preform is reheated utilizing RF energy in accordance with this invention, no overheating is required, and therefore, undesirable crystallization on the exterior surface of the preform is entirely eliminated.

With the above and other objects in view that will hereinafter appear, the nature of the invention will be more clearly understood by reference to the following detailed description, the appended claims, and the several views illustrated in the accompanying drawings.

IN THE DRAWINGS:

Figure 1 is a schematic prior art showing of the temperature gradient in a preform wall wherein the preform in heated in an oven.

Figure 2 is a prior art schematic showing of the heating of polymer film or sheet utilizing RF heating and showing the expected constant temperature throughout the thickness.

Figure 3 is a schematic sectional view taken through an RF heater, showing the manner in which a preform is supported and the relationship of electrode plates with respect thereto.

Figure 4 is a schematic horizontal cross-sectional view taken through a polymer preform being heated using RF energy, and shows schematically the distribution of electric field through the preform.

Figure 5 is a schematic sectional view taken through a polymer preform wall heated utilizing RF energy, and shows the discovered unexpected temperature gradient.

Figure 6 is a schematic view similar to Figure 5 and shows how the temperature gradient in the polymer preform wall may be varied by varying the power input of the RF energy.

Figure 7 is a fragmentary schematic vertical sectional view through the lower portion of a preform, and shows the required relationship of the electrode plates with respect to the bottom of the preform to prevent overheating.

Figure 8 is a schematic sectional view taken through the wall of a polymer bottle blow molded utilizing a preform which has been heated in accordance with the illustration of Figure 1.

Figure 9 is an enlarged fragmentary prior art showing of a void which has been found in conventional commercially produced polymer bottles.

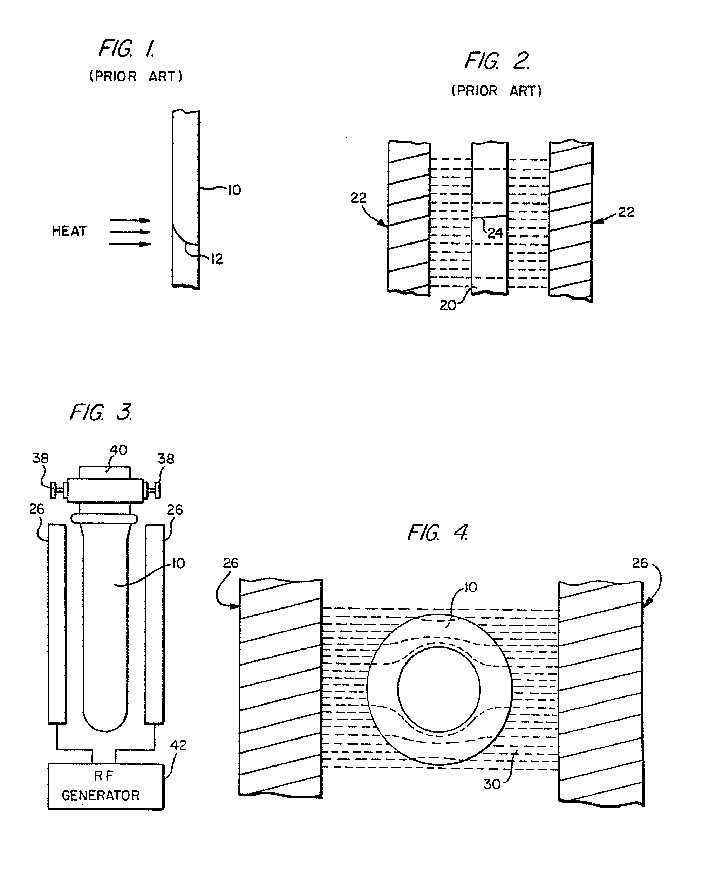

In the conventional commercial form of beverage bottles, tubular preforms are first formed in a first operation and permitted to cool to ambient temperature. Normally, these preforms are formed by an injection molding process. When the preforms are to be blow molded into bottles, it is necessary that they be reheated to a blow molding temperature. This reheating is currently being effected in ovens using calrods as heaters, although consideration is also being given to heating utilizing quartz heaters. The preforms are heated externally with the heat being conducted through the wall of the preform to the interior. As a result, as is best shown in Figure 1, a typical preform 10 has a temperature gradient indicated by the line 12 where the temperature of the preform wall is the highest at the external surface and the lowest at the interior surface.

It is to be understood that in the blow molding of a typical preform 10 to form a bottle, the body portion of the preform is radially stretched a material amount with the result that there is a material thinning of the wall material. The net result is that the interior wall surface of the preform is stretched a greater degree than the exterior.

It has been recently found that due to the differential temperature and the reverse differential stretching, the outer surface portion of the preform readily radially stretches while there is increased resistance to stretching toward the inner surface of the preform. Accordingly, with reference to Figure 8, it will be seen that a wall 14 of a bottle which has been blow molded from a PET preform exhibits a laminating effect as shown by the lines of separation 16 in Figure 8. Further, as the different laminates are made, voids 18 can be created. A typical void 18 is best shown in Figure 9.

It does not appear that the laminating effect unduly weakens the blow molded bottle. However, since the blow molded bottle formed of PET is usually commercially utilized in the packaging of carbonated beverages, the laminating effect does materially influence the permeating of substances and particularly the loss of $CO_2$ when the packaged product is a carbonated beverage. It is to be appreciated that fluid molecules can slip between molecules of the polymer even when no lamination occurs. However, it has been found that when the laminating effect does exist, as it does in present commercial PET blow molded bottles formed from preforms reheated in ovens, there is a much greater than usual fluid molecule transfer and in the case of carbonated beverages under pressure, a greater than usual $CO_2$ loss.

It has been found, with reference to the prior art showing of Figure 2, that when polymer films or sheets 20 are heated by RF heating, such as between two plate electrodes, the film or sheet is uniformly heated throughout its thickness as indicated by the horizontal temperature indicator line 24.

On the basis of the foregoing with reference to Figure 2, it has been assumed that when the PET preforms were reheated by us using RF heating, there would be a uniform heating of the preform wall throughout its thickness. However, other advantages were realized with RF heating, particularly in that the time required for RF heating of a preform was relatively short and therefore if there were a machine shutdown there would be a much smaller number of preforms in the system which would have to be discarded. It must be appreciated that when preforms are being reheated in a long oven and there is a machine shutdown, all of the preforms within the oven will become overheated and of no further use. The same is true when an RF heater is utilized. However, because of the very short time required to RF energy reheat preforms, only a small number of preforms are within the heater, and therefore the number of preforms which must be discarded in the case of machine shutdown will be greatly reduced.

It is also to be understood that a further advantage is available using RF energy to reheat preforms in that the length of the heater segment is greatly reduced as compared to the length of existing ovens, and thus much less space is required for the machinery.

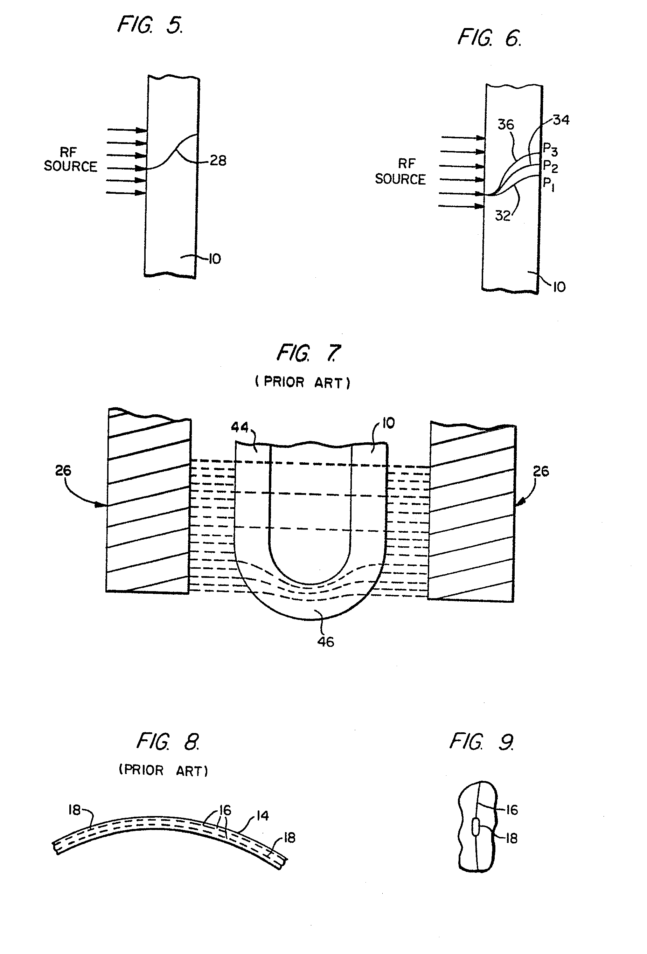

We have discovered that the premise that the preform would be uniformly heated throughout its wall thickness utilizing RF energy was incorrect and that, unlike the RF energy heating of films and sheets where uniform heating throughout the thickness occurred, when a cylindrical preform body is reheated by passing the preform between spaced RF energy plate electrodes 26 as shown in Figures 3 and 4, the temperature gradient is generally the reverse of that of the temperature gradient line 12 in Figure 1. The temperature gradient as indicated in Figure 5 by the gradient line 28 clearly shows that the temperature of the preform wall is higher adjacent its interior surface than it is at its exterior surface.

It has been found that the temperature gradient as identified by the gradient line 28 of Figure 5 is due to: 1) preform sectional geometry, 2) RF field distortion, 3) enhancement of dielectric loss factor with temperature, 4) poor thermal conductivity of polymer, and 5) RF energy travels through the polymer in preference to air.

With respect to items 1), 2) and 5), it will be apparent from Figure 4 that due to the fact that the body of the preform 10 is cylindrical and the field 30 of the RF energy is distorted so that all electrons striking the body of the preform will flow through the material of the preform as opposed to through the air encompassed by the body of the preform, there will be a concentration of the field strength with there being a greater field strength adjacent the interior surface of the preform body wall than adjacent the outer surface of that preform body wall. Due to these factors and the fact that the exterior of the preform body being heated is exposed to the atmosphere as opposed to the air exposed to the interior wall surface of the preform body being confined, there will be less dissipation of the heat from the interior of the preform body than from the exterior. Finally, with respect to item 3) above, inasmuch as the inner surface portion of the preform body will heat quicker than the outer surface portion, there will be a gradually greater heating of the inner surface of the preform body as opposed to the heating of the outer surface of the preform body.

This unexpected heating of the preform wall to a higher temperature adjacent its inner surface fulfills the requirements of a temperature differential through the wall of the preform body with the temperature being highest at the inner surface, as outlined in U. S. Patent Nos. 3,786,331 and 3,934,743. Thus the interior portion of the preform wall is readily adapted to the greater stretching with the blow molded article (bottle) being relatively free of chain scission effect and with a reduced, even entirely eliminated, laminating effect. The blow molded bottle thus formed from an RF energy heated preform has been found to have a material reduction in fluid permeation. Since in the case of carbonated beverages under pressure, the fluid permeation will be primarily $CO_2$ and since $CO_2$ loss in beverage bottles is critical, it will be readily apparent that this discovery is highly useful in the commercial plastic beverage bottle manufacturing field.

Referring now to Figure 6, it is to be noted that it has also been discovered that the temperature gradient profile may be varied by varying the power of the RF energy.  Higher power yields faster heating in less time, and therefore there is less time for heat dissipation to the surrounding air.

In Figure 6 there has been illustrated three temperature gradient lines 32, 34 and 36 which are identified as being related to RF energy powers P1, P2 and P3, respectively.  The illustration is only schematic, and it is to be understood that further variations in temperature gradients can be obtained by other variations in the power of the RF energy and time (as heat dissipates through the polymer).

Referring once again to Figure 3, it will be seen that preferably a preform 10 to be heated is carried by a suitable conveyor 38 between the plate electrodes 26.  The conveyor 38 is provided with a holder 40 for each preform and each holder 40 is mounted relative to the conveyor 38 for rotation about its axis (the axis of the preform).  It is to be understood that the holder 40 will be suitably rotated as the preform 10 moves between the plate electrodes 26 to provide for a uniformity of heating of the preform particularly in view of the electron path of the RF energy through the preform as illustrated in Figure 4.

It has also been found that as a result of the same phenomenon which provides the temperature gradient in the preform wall, the base of the preform 10 is overheated unless there is a control of the position of the lower edges of the plate electrodes 26 relative to the bottom of the preform 10.

The preform 10, in addition to being provided with a suitable neck finish with which the holder 40 is engaged, has a substantially cylindrical body 44 which terminates in a generally hemispherical bottom 46. For the five reasons expressed above, it will be seen that there is undue heating of the bottom 46. The concentration of the RF energy field in the bottom 46 is best shown in Figure 7. Therfore, the plate electrodes 26 most effectively have their lower edges positioned slightly above the path of the extreme lower surfaces of the preform 10, as is shown in Figure 7. In this manner the temperature to which the bottom wall 46 of the preform is heated may also be controlled.

It is to be understood that while there is a slightly less stretching of the preform in the formation of the bottle base due to the thickness of the base as compared to the thickness of the bottle body, there is still a material thinning of the base with the result that, like the body of the preform, the base is also subject to a greater stretching of the interior base wall portion as opposed to the exterior base wall portion, and therefore this controlled temperature gradient in the preform base can be advantageously utilized to prevent the above discussed chain scission and laminating effect in the bottle bottom.

Although the discovery of this invention is primarily beneficial with respect to the blow molding of bottles for receiving carbonated beverages and wherein the polymer is PET, it is to be understood that the invention and discovery are also applicable to blow molding of bottles and like articles for other products, particularly liquid or gaseous products.

- 12 -

0089201

## CLAIMS

1. The discovery that tubular preforms for bottles may be advantageously heated to a blow molding temperature by positioning a preform between two spaced plate electrodes and introducing RF energy through the preform from said plate electrodes and heating the preform throughout the wall thickness thereof with the temperature of the heated preform being the greatest along the interior surface of the preform.

2. The discovery of claim 1 wherein the heated preform is radially outwardly stretched in the blow molding of the preform into a bottle with said preform interior surface expanding greater than the exterior surface of the preform.

3. The discovery of claim 2 wherein the bottle has a wall generally free of chain scission and laminating effect.

4. The discovery of claim 1 wherein the plastic material is polyethylene terephthalate.

5. A method of heating plastic material tubular preforms comprising the steps of providing spaced electrode plates, supporting a preform in depending relation from a holder, and moving the preform between the electrode plates while rotating the preform and applying a source of RF electrical energy to the electrode plates to heat the preform to a preselected external wall surface temperature with the temperature of the preform increasing radially inwardly through the wall.

6. A method according to claim 5 wherein the preform has a rounded base, and the temperature of the base increases inwardly from the exterior of the base.

7. A method according to claim 5 wherein the preform has a hollow rounded base, and the base positively projects below lower edges of the electrode plates a distance less than the wall thickness of the base to control the heating of the base.

8. Apparatus for heating a plastic material preform of the type including a tubular body having a rounded closed base portion, said apparatus comprising a pair of spaced electrode plates, a preform holder, means for moving said preform holder to pass a preform between said electrode plates while rotating the preform about its axis, a source of RF electrical energy coupled to said electrode plates, and the relative heights of said electrode plates and a preform to be heated and the path of said preform holder being such that a preform being heated has a base portion thereof positively projecting below lower edges of said electrode plates a distance no greater than the thickness of the intended preform base portion.

### FIG. 1.
(PRIOR ART)

HEAT

10

12

### FIG. 2.
(PRIOR ART)

22

22

24

20

### FIG. 3.

38  40  38

26  26

10

42

RF
GENERATOR

### FIG. 4.

26  26

10

30

FIG. 5.

RF
SOURCE

28

10

FIG. 6.

RF
SOURCE

36
34
P₃
P₂
P₁
32

10

FIG. 7.

(PRIOR ART)

26

44
10

26

46

FIG. 8.

(PRIOR ART)

18
16
14
18

FIG. 9.

16
18